# EUROPEAN PATENT SPECIFICATION

(11) **EP 2 471 629 B1**
(45) Date of publication and mention of the grant of the patent: **10.07.2013**
(21) Application number: 11382387.6
(22) Date of filing: 20.12.2011
(51) Int. Cl.: B23P 19/00, B65G 47/14

(54) **Device and method for positioning retaining circlips**
Vorrichtung und Verfahren zum Positionieren von Sprengringen
Dispositif et procédé pour le positionnement d'anneaux de retenue

(30) Priority: 28.12.2010 ES 201031975
(43) Date of publication of application: 04.07.2012
(73) Proprietor: Mondragon Goi Eskola Politeknikoa Jose Maria Arizmendiarrieta, S.COOP., 20500 Arrasate (Guipuzcoa) (ES)
(72) Inventor: Arana Arexolaleiba, Nestor, 20540 Eskoriatza (ES); Saenz De Argandoña Fernandez De Gorostiza, Eneko, 01015 Vitoria (ES); Wilhelm Pop, Robert, 70569 Stuttgart (RO); García Crespo, Carlos, 20500 Mondragon (ES); Izaguirre Altuna, Alberto, 20550 Aretxabaleta (ES)
(74) Representative: Igartua, Ismael

(56) References cited:
- DD-A1- 221 950
- DD-A1- 259 612
- GB-A- 2 174 378
- JP-U- 48 014 777
- JP-U- 57 138 821
- JP-U- 58 023 819
- JP-U- 63 190 123
- US-A- 3 082 886
- US-A- 3 448 507
- US-A- 4 687 399

## Description

### TECHNICAL FIELD

This invention relates to devices for positioning retaining circlips in a specific manner, and the procedure implemented in said devices in carrying out the positioning.

A device and a method for positioning retaining circlips is disclosed in US 3082886.

### PRIOR ART

Devices such as shakers and hoppers used to separate individual circlips from piles of interconnected circlips are well known in the prior art.

There are also known devices for storing and supplying circlips based on an automatic separating system prior to storage, with devices such as shakers or manual procedures, and resulting in the subsequent storage of the circlips and their supply to the process in question.

Patent US4687399 discloses a mechanism and a method for guiding retaining circlips, with configured circlips including a guide hole and a groove in their open ends. The retaining circlips may initially be collected in a storage system, and a standard automatic individual circlip-separating mechanism may then be used to feed the mechanism guiding them. This guide mechanism consists of a sloping rail along which the circlips move by force of gravity, although vibrations or a pusher mechanism may also be used to move them forward. As they move forward they come up against a sorting rod, with the result that if the circlip has the hole of the end that coincides with the sorting rod, the circlip moves on to the next workstation to undergo another process, and if it comes up against the groove, the sorting rod forces the circlip off the rail in a controlled manner so that it may be sorted again. This system is used, for example, to guide in a certain manner retaining circlips, one of the faces of which is bevelled, the circlip then being stored in a device for its subsequent use.

### BRIEF DESCRIPTION OF THE INVENTION

It is an object of this invention to provide a device for positioning retaining circlips and a positioning procedure as defined in the claims.

The device for positioning retaining circlips is used in processes for the manufacture of the circlips themselves and may be used in other processes, in which the flow is continuous, resulting in the ordered storage of the circlips for their subsequent use and avoiding the use of shakers. The retaining circlips obtained in the manufacturing process reach the positioning device in an unknown position and exit it positioned in a certain manner.

One aspect of the invention relates to a device for positioning retaining circlips adapted for positioning C-shaped or similar retaining circlips, which comprises an entrance ramp that receives the circlips, a flat plate continuous to the entrance ramp, a longitudinal bar continuous to the flat plate with a specific shape, and a side wall parallel to the flat plate and the longitudinal bar, wherein the retaining circlips move from an unknown position all the way along the device to their final position as a result of the potential energy they are disposed with at the entrance of the device.

Another aspect of the invention relates to a procedure for positioning retaining circlips that is implemented in a device, such as the one described above, which comprises the vertical stabilisation stage on the entrance ramp, the rotation-start stage on the flat plate, the rotation and coupling stage on a first straight part of the longitudinal bar, and the slowing-down and positioning stage on a second straight part of the longitudinal bar.

A device for positioning retaining circlips is obtained and which may be used in the process of manufacturing the circlips themselves, or in other processes, where circlips must be disposed in an ordered manner and packaged for their use and/or sale. This device allows circlips of a certain shape to be stored without the use of standard shakers, hoppers or individual manual sorting procedures, which render the entire process of using the retaining circlips more expensive and complex.

These and other advantages and characteristics of the invention will be made evident in the light of the drawings and the detailed description thereof.

### DESCRIPTION OF THE DRAWINGS

Figure 1 shows a view in perspective of an embodiment of the device for positioning retaining circlips of the invention.
Figure 2 shows a view in perspective of the device of Figure 1, without the tunnel.
Figure 3 shows a cross-sectional view taken along line A-A of the first straight part of the longitudinal bar of the device of Figure 1, and its slope in relation to the vertical plane.
Figure 4 shows a cross-sectional view taken along line C-C of the second straight part of the longitudinal bar of the device of Figure 1.
Figure 5 shows a cross-sectional view taken along line B-B of the intermediate curved part of the longitudinal bar of the device of Figure 1.
Figure 6 shows a view of an embodiment of a C-type retaining circlip.
Figure 7 shows an elevated side view of the device of Figure 1, with the slope of the longitudinal axis of the first straight part of the longitudinal bar in relation to the horizontal plane, the perpendicularity of the second straight part of the longitudinal bar in relation to said longitudinal axis, and the slope of the entrance ramp in relation to the horizontal plane.
Figure 8 shows a view in perspective of the device for positioning retaining circlips of Figure 1, with the different stages of the procedure for positioning the circlips.
Figure 9 shows an elevated front view of the device for positioning retaining circlips of Figure 1, with the different stages of the procedure for positioning the circlips.
Figures 10 and 11 show an elevated front view of two possible embodiments of devices for the ordered storage of retaining circlips.

### DETAILED DISCLOSURE OF THE INVENTION

The device for positioning retaining circlips 1 is used in processes for the manufacture of circlips 12 to prevent them from piling up and becoming entangled with each other, and may also be used in other processes in which the flow is continuous, and where the circlips 12 are to be stored in an ordered manner for their subsequent use, thereby avoiding the use of shakers.

The process of manufacturing the retaining circlips 12 comprises a first phase in which a press is used. The press is disposed with a die that has a plurality of cavities in the shape of the circlips 12, and is fed with a metal strip with the required characteristics for manufacturing them. In one embodiment of the die with two cavities, each time the press strikes two circlips 12 are obtained and which move to the next phase by dropping down through two holes in the die and then through two pipes to a conveyor belt with spacers that differentiate the circlips 12 each time the press strikes. In this phase blockages may occur in said piping, as a result of which blowers are fitted in order to move the circlips 12. As a result of this, instead of the circlips 12 reaching the conveyor belt in twos, they may on occasion arrive in greater quantities. For this purpose the end of the conveyor belt is disposed with a camera that is able to detect the amount of circlips 12 in each position and also take a photo of each circlip 12 so their quality may be controlled, with the result that if abnormalities are detected, it sends a signal so that these may be dealt with. As a result, the conveyor belt moves the circlips 12 forward in the required amount and quality.

In the next phase of the process the conveyor belt goes up a ramp, and on reaching the end of it the circlips 12 fall from the other side of the ramp towards an entrance channel that leads on to the device for positioning retaining circlips 1, reaching it in an unknown position and with a certain amount of potential energy.

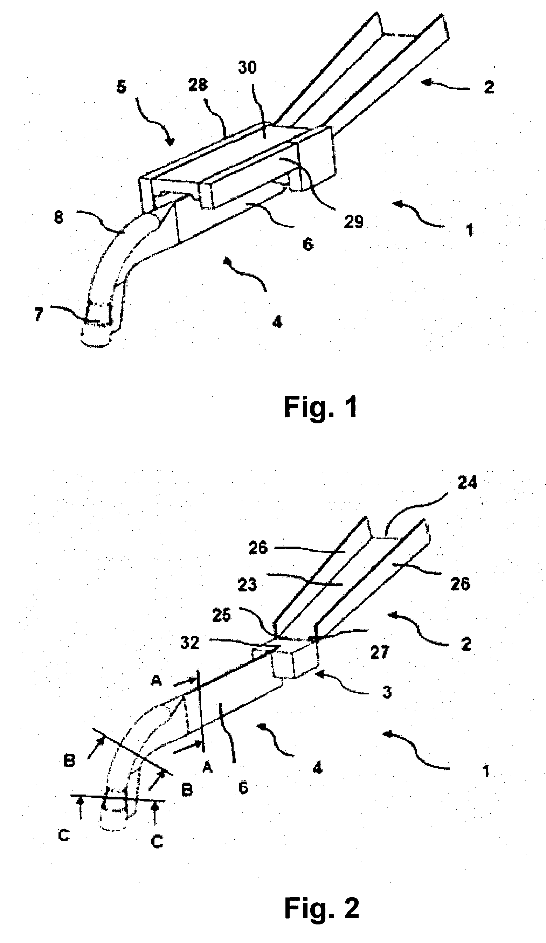

Figures 1 and 2 show a view in perspective of the device for positioning retaining circlips 1 in accordance with one embodiment. The device 1 comprises, first of all, an entrance ramp 2 that receives the circlips 12 arriving from the previous process; a flat plate 3, which may be seen in Figure 2, where the tunnel has been removed in order to show it, and which follows on from the entrance ramp 2; a longitudinal bar 4 continuous to the flat plate 3 with a specific shape; and a side wall 28 that forms part of a tunnel 5 that covers the flat plate 3 and the longitudinal bar 4. The retaining circlips 12, which reach the entrance ramp 2 in an unknown position, move all the way along the positioning device 1 to their final position as a result of the potential energy they are disposed with.

The longitudinal bar 4 has three different parts: a first straight part 6; a second part 7 that is also straight; and an intermediate curved part 8 that connects the two previous parts.

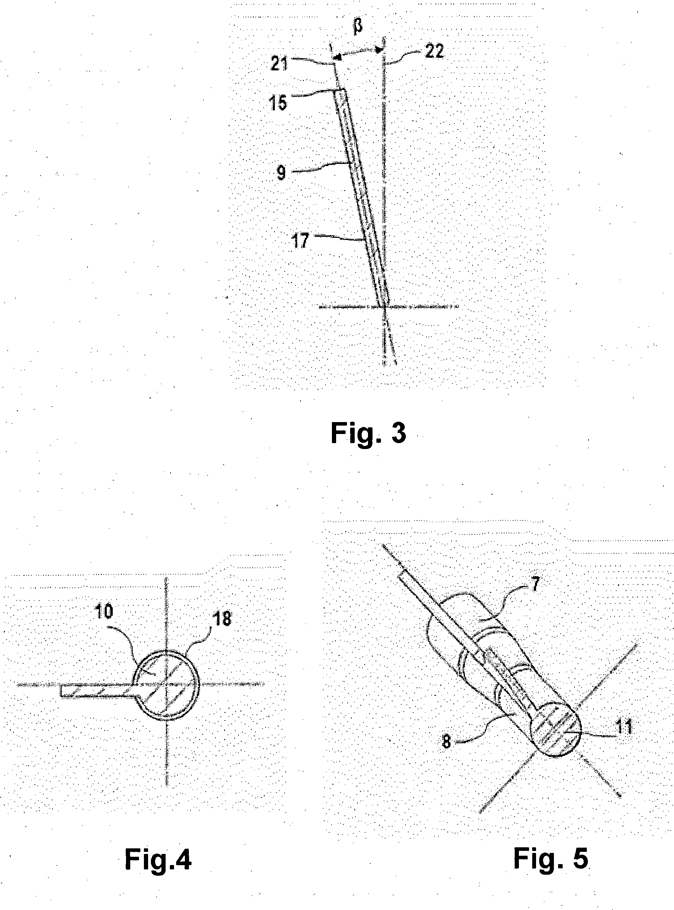

Figure 3 shows a view in cross-section 9 of the first straight part 6 of the longitudinal bar 4 of an embodiment of the positioning device 1, which is substantially rectangular, and also shows the certain angle β that is formed by the axis 21 of the smaller side 15 of said cross-section 9 in relation to the vertical plane 22.

Figure 4 shows a view in cross-section 10 of the second straight part 7 of the longitudinal bar 4, which is substantially circular with a rectangular projection that acts as a guide for the circlips 12.

Figure 5 shows a view in cross-section 11 of the intermediate curved part of the longitudinal bar 4, which is substantially circular with a rectangular projection that acts as a guide for the circlips 12.

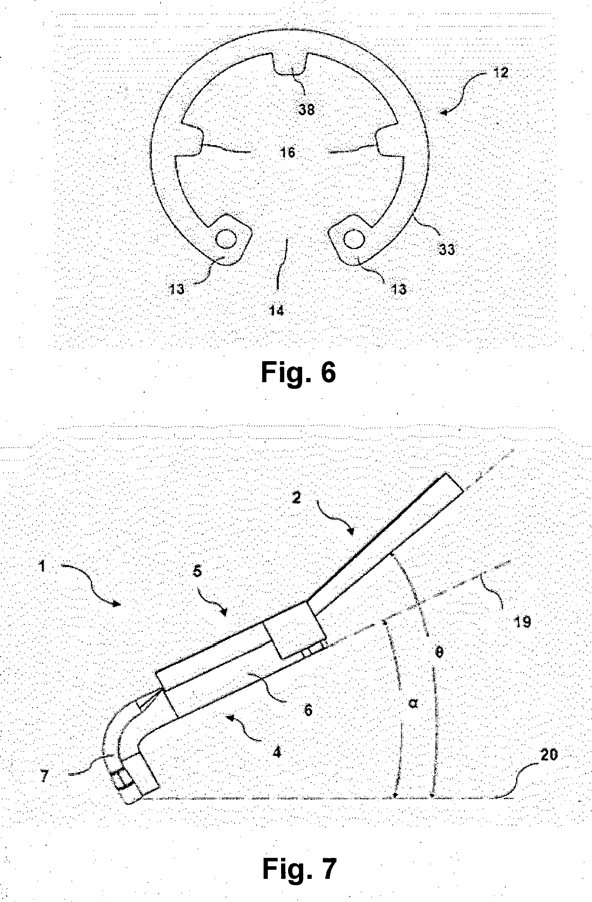

Figure 6 shows a view of an embodiment of a C-type retaining circlip 12 with open ends 13. The opening 14 between the ends 13 is larger than the smaller side 15 of the rectangular section 9 of the first straight part 6 of the longitudinal bar 4, which allows the introduction of the ends 13 of the circlips 12 on said first straight part 6 of the longitudinal bar 4 and their coupling with it. The external diameter 33 of the circlips 12 is smaller than the larger side 17 of the rectangular section 9 of the first straight part 6 of the longitudinal bar 4, with the result that when the circlips 12 couple on to said first straight part 6 of the longitudinal bar 4 they do not rotate on it and are able to slide. The curved part 8 of the longitudinal bar 4 allows the direction in which the circlips 12 move forward to be changed, and as a result of the friction, to slow them down. These types of circlips have internal protuberances 38 that determine the internal diameter 16 of the circlips 12, which is slightly larger than the external diameter 18 of the cross-section 10 of the second straight part 7 of the longitudinal bar 4, with the result that following the slowing-down to which the circlips 12 are subjected in the curved part 8, they are positioned in an ordered manner, guided by the rectangular projection, and may be stored in other devices disposed at the exit of the positioning device 1.

Figure 7 shows an elevated side view of the device of Figure 1 with a certain angle α formed by the axis 19 parallel to the longitudinal axis of the first straight part 6 of the longitudinal bar 4 in relation to the horizontal plane 20, a substantial perpendicularity of the second straight part 7 of the longitudinal bar 4 in relation to said longitudinal axis 19, and a certain angle θ formed by the entrance ramp 2 in relation to the horizontal plane 20.

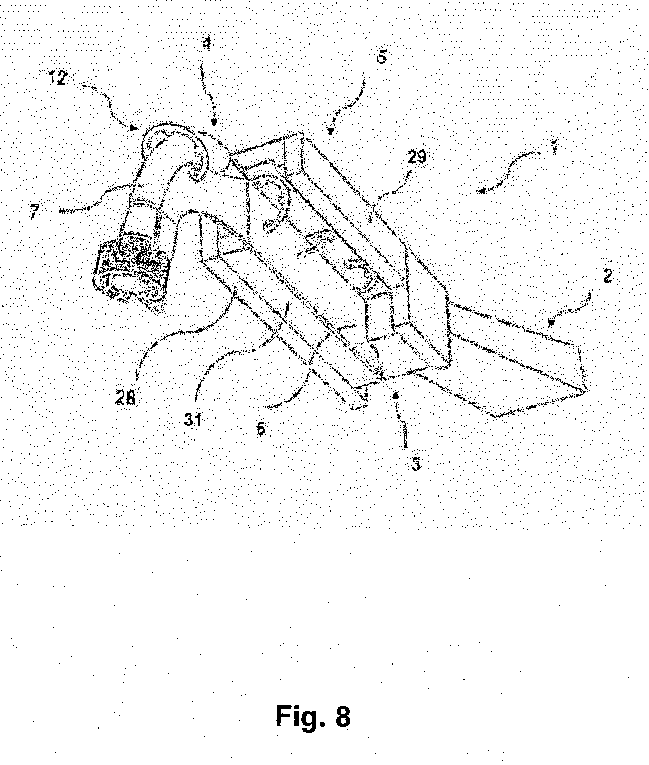

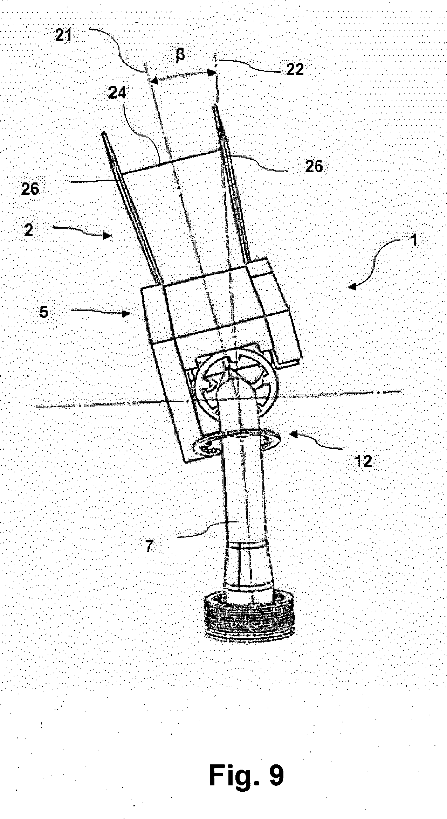

Figures 8 and 9 show a view in perspective and an elevated front view of the device for positioning retaining circlips 1, with the various stages of the procedure for positioning the circlips 12. The process begins when the retaining circlips 12 arrive from a previous process and fall towards an entrance channel that leads on to the device for positioning retaining circlips 1, reaching it in an unknown position and with a certain amount of potential energy. After the entrance channel is situated the first part of the positioning device 1, which is the entrance ramp 2, which is centred on the same axis 21 with the first straight part 6 of the longitudinal bar 4, and comprises a flat surface 23 with a conical section that forms the angle θ of slope in relation to the horizontal plane 20, and the angle of slope β, which forms its vertical longitudinal plane in relation to the vertical plane 22. The entrance ramp 2 has an entrance 24 that is wider than the exit 25, and has side walls 26 that allow the circlips 12 that fall and start to bounce on its surface 23, to stabilise vertically all the way along its length and not fall outwards.

Following the entrance ramp 2 the circlips 12 reach the flat plate 3, which is centred and is situated at the same height, sliding, and reaching the flat plate 3 through an entrance 27 that has the same width as the exit 25 of the entrance ramp 2. The surface 32 of the flat plate 3 forms the angle α in relation to the horizontal plane 20. The flat plate 3 also forms the angle β in relation to the vertical plane 22.

The positioning device 1 comprises a tunnel 5 that has two side walls 28 and 29, an upper wall 30 and a lower wall 31 that connects the side wall 28 to the first straight part 6 of the longitudinal bar 4, and covers the flat plate 3 and partially the first straight part 6 of the longitudinal bar 4. The tunnel 5 unit is centred with the entrance ramp 2, the flat plate 3 and the first straight part 6 of the longitudinal bar 4, and has the same angles α and β in relation to the horizontal 20 and vertical 22 planes as the flat plate 3 and the first straight part 6 of the longitudinal bar 4.

When the circlips 12 reach the flat plate 3 by sliding, as a result of its slope in relation to the horizontal 20 and vertical 22 planes, they move forward and collide and bounce against the right side wall 28 of the tunnel 5 in the direction of movement of the circlips 1. The linear forward movement and the friction with the right side wall 28 due to their colliding, causes a rotary movement of the circlips 12 on their axis. The flat plate 3 has a surface 32 with a large enough area for the circlips 12 to move forward on their rotary downward movement, while bouncing on the side wall 28 of the tunnel 5.

When the circlips 12 have moved past the flat plate 3 they reach the first straight part 6 of the longitudinal bar 4, which is centred and situated at the same height. The right side wall 28 of the tunnel 5 in the direction of movement of the circlips 12 is at a distance from the axis 21 of the first straight part 6 of the longitudinal bar 4 of approximately the measurement of the radius of the external circumference 33 of the circlip 12, with the result that the circlips 12 in their rotary downward movement collide and bounce against the right side wall 28 of the tunnel 5 without falling outwards. As they slide and rotate on the first straight part 6 of the longitudinal bar 4, there is a point at which the opening 14 of the open ends 13 of the circlips 12 coincides with the smaller side 15 of the rectangular cross-section 9 of the first straight part 6 of the longitudinal bar 4 and causes coupling by introducing the ends 13 of the circlips 12 into said area of the bar 4, continuing their downward sliding.

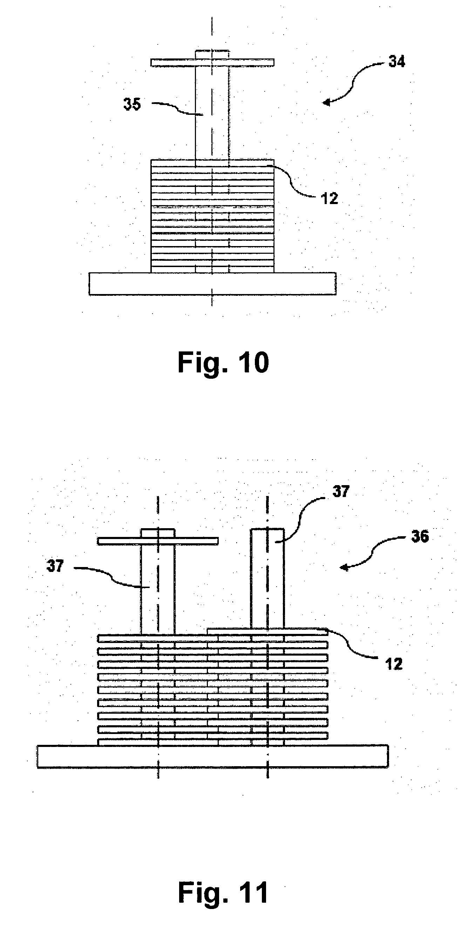

The circlips 12 then exit the first straight part 6 of the longitudinal bar 4 and reach the curved part 8, in which a change in their direction is caused, which, in conjunction with the friction with said area of the bar 4, causes a slowing down at the entrance of the second straight part 7 of the longitudinal bar 4. Finally, the circlips 12 slide along this section of the bar 7 and are positioned in an ordered manner thanks to its rectangular projection, at the entrance of any storage device disposed at the exit of the positioning device 1, as shown in Figures 10 and 11. Said figures show an elevated front view of two possible embodiments of devices for the ordered storage of retaining circlips 12. One of them 34 positions the circlips 12 on a vertical axis 35, which allows them to be stored, and another embodiment 36 positions the circlips 12 on two vertical axes 37, which enables them to be disposed in an alternating manner, thereby reducing the volume of the unit for their use, for example, in heat-treatment processes.

As a result, a device for positioning retaining circlips 1 is obtained and whose various defined parts are made of metal, plastic or a material of similar characteristics, which allows it to operate with C-shaped or similar retaining circlips 12 that have a circular external diameter 33 with an opening 14 between their two open ends 13, and which in the inside of their flat surface present protuberances 38 that define an internal circumference with a diameter 16. The circlips 12 may be of different sizes and also made of different materials, as a result of which the weight of each circlip 12 differs, which means that in the construction of the positioning device 1 the sizes of each part vary the same as the slopes α, β and θ described throughout the description.

This positioning device 1 allows the circlips 12 to be stored in an ordered manner in devices disposed at the exit of the device 1, with the result that, depending on the process in which operations are being carried out, the use of shakers to separate the circlips 12 that are piled up and entangled with each other and which use external energy, is prevented, or the use of labour to perform said separation. Once they have been stored and ordered, it allows their use in processes subsequent to the manufacture and ordering of the circlips 12, such as heat treatments, the mass assembly of products and other similar processes.

A reduction in manufacturing costs is thus achieved, as the use of external energy and/or the use of labour is eliminated, and an improvement in the ambient working conditions and the quality of the manufacturing processes is also achieved as unpleasant vibrations and noise are eliminated.

## Claims

1. Device for positioning retaining circlips (1) adapted for positioning C-shaped or similar retaining circlips (12), **characterised in that** it comprises:
an entrance ramp (2) that receives the circlips (12);
a flat plate (3) continuous to the entrance ramp (2);
a longitudinal bar (4) continuous to the flat plate (3) with a specific shape; and
a side wall (28) parallel to the flat plate (3) and the longitudinal bar (4), wherein the retaining circlips (12) move from an unknown position all the way along the device (1) to their final position, as a result of the potential energy they are disposed with at the entrance to the device (1).

2. Device (1) according to claim 1, wherein the longitudinal bar (4) has a first straight part (6) and a second straight part (7), both connected by a curved part (8).

3. Device (1) according to claim 2, wherein the first straight part (6) of the longitudinal bar (4) has a substantially rectangular cross-section (9), and the second straight part of the bar (7) has a substantially circular cross-section (10) with a rectangular projection.

4. Device (1) according to claim 3, wherein the smaller side (15) of the cross-section (9) of the first straight part (6) of the longitudinal bar (4) is smaller than the opening (14) between the open ends (13) of the circlips (12), the larger side (17) is larger than the external diameter (33) of the circlips (12), and the external diameter (18) of the cross-section (10) of the second straight part (7) of the longitudinal bar (4) is slightly smaller than the internal diameter (16) of the circlips (12).

5. Device (1) according to any of claims 2 to 4, wherein the axis (19) parallel to the longitudinal axis of the first straight part (6) of the bar (4) forms with the horizontal plane (20) a certain angle α, the axis (21) of the smaller side (15) of the cross-section (9) of the first straight part (6) of the longitudinal bar (4) forms with the vertical plane (22) a certain angle β, and the second straight part (7) of the longitudinal bar (4) is substantially perpendicular to the axis (19) parallel to the longitudinal axis of the first straight part (6) of the bar (4).

6. Device (1) according to claim 5, wherein the entrance ramp (2) is centred on the axis (21) with the first straight part (6) of the longitudinal bar (4); its exit (25) has the same width as the entrance (27) of the flat plate (3) and is situated at the same height; it is disposed with side walls (26) to prevent the circlips (12) from dropping; the longitudinal vertical plane of the surface (23) forms the angle β with the vertical plane (22), said surface (23) forms a certain angle θ with the horizontal plane (20); and is long enough to stabilise the circlips (12) as they bounce vertically when it receives them from the previous process.

7. Device (1) according to claim 6, wherein the flat plate (3) of the device (1) is centred on the axis (21) with the first straight part (6) of the longitudinal bar (4) and the entrance ramp (2), and is situated at the same height, the longitudinal vertical plane of the surface (32) forms the angle α with the horizontal plane (20); forms the angle β with the vertical plane (22); and it has a large enough area for the circlips (12) to rotate.

8. Device (1) according to claims 5 to 7, wherein it comprises a tunnel (5) formed by the side wall (28), a second side wall (29), an upper wall (30) and a lower wall (31); is centred on the axis (21) with the entrance ramp (2), the flat plate (3) and the first straight part (6) of the longitudinal bar (4); and, as is the case with the flat plate (3) and the first straight part (6) of the longitudinal bar (4), forms the angle α with the horizontal plane (20) and forms the angle β with the vertical plane (22).

9. Device (1) according to any of claims 2 to 8, wherein the distance between the side wall (28) and the axis (21) of the first straight part (6) of the longitudinal bar (4) is approximately the same as the measurement of the radius of the external circumference (33) of the circlips (12).

10. Device (1) according to any of the preceding claims, wherein the various parts that comprise the device (1) are made of metal, plastic or a material of similar characteristics.

11. Procedure for positioning retaining circlips (12) implemented in a positioning device (1) adapted for positioning C-shaped or similar retaining circlips (12), the positioning device (1) comprising:
an entrance ramp (2) that receives the circlips (12);
a flat plate (3) continuous to the entrance ramp (2);
a longitudinal bar (4) continuous to the flat plate (3) with a specific shape; and
a side wall (28) parallel to the flat plate (3) and the longitudinal bar (4); **characterised in that** it comprises:
a vertical stabilisation stage on the entrance ramp (2), wherein the circlips (12) begin the process without a specific position and with a certain potential energy, stop bouncing vertically along the ramp (2), and reach the flat plate (3),
a rotation-start stage on the flat plate (3), wherein the circlips (12), as a result of their potential energy, slide along the flat plate (3), bouncing against the side wall (28), causing them to rotate on their axis as a result of the friction, and
a coupling, slowing-down and positioning stage on the longitudinal bar (4), wherein the circlips (12) couple on to said bar (4), carry on sliding and eventually slow down and are positioned.

12. Positioning procedure according to claim 11, wherein the longitudinal bar (4) comprises a first straight part (6) and a second straight part (7) both connected by curved part (8), comprising the coupling, slowing-down and positioning phase,
a coupling stage on the first straight part (6), wherein the circlips (12) carry on bouncing against the side wall (28) and slide and rotate, until the circlips (12) couple on to said part of the bar (4), continuing to slide, and
a slowing-down and positioning stage on the curved part (8) and on the second straight part (7) of the longitudinal bar (4), wherein the circlips (12), once the first straight part (6) of the longitudinal bar (4) has been completed, change direction and slow down on the curved part (8), and carry on sliding along the second straight part (7) of the longitudinal bar (4), positioning themselves in a suitable manner as a result of a rectangular projection on the second straight part (7).

## Patentansprüche

1. Zur Positionierung C-förmiger oder ähnlicher Sicherungsringe (12) geeignete Vorrichtung zur Positionierung von Sicherungsringen (1), **dadurch gekennzeichnet, dass** sie umfasst:
eine die Sicherungsringe (12) aufnehmende Eingangsrampe (2);
eine an die Eingangsrampe (2) anschließende flache Platte (3);
ein an die flache Platte (3) anschließender Längsstab (4), der eine spezifische Form aufweist; und
eine parallel zur flachen Platte (3) und zum Längsstab (4) verlaufende Seitenwand (28), wobei sich die Sicherungsringe (12) infolge der potenziellen Energie, die ihnen beim Eintritt in die Vorrichtung (1) verliehen wird, von einer unbekannten Position entlang der ganzen Vorrichtung (1) in ihre Endposition verschieben.

2. Vorrichtung (1) nach Anspruch 1, wobei der Längsstab (4) einen ersten geraden Abschnitt (6) sowie einen zweiten geraden Abschnitt (7), die über einen gekrümmten Abschnitt (8) miteinander verbunden sind, aufweist.

3. Vorrichtung (1) nach Anspruch 2, wobei der erste gerade Abschnitt (6) des Längsstabs (4) einen im Wesentlichen rechteckigen Querschnitt (9) und der zweite gerade Abschnitt des Stabs (7) einen im Wesentlichen kreisförmigen Querschnitt (10) und einer rechteckigen Projektion aufweist.

4. Vorrichtung (1) nach Anspruch 3, wobei die kleinere Seite (15) des Querschnitts (9) des ersten geraden Abschnitts (6) des Längsstabs (4) kleiner ist als die Öffnung (14) zwischen den offenen Enden (13) der Sicherungsringe (12), die größere Seite (17) größer ist als der Außendurchmesser (33) der Sicherungsringe (12), und der Außendurchmesser (18) des Querschnitts (10) des zweiten geraden Abschnitts (7) des Längsstabs (4) etwas kleiner ist als der Innendurchmesser (16) der Sicherungsringe (12).

5. Vorrichtung (1) nach einem der Ansprüche 2 bis 4, wobei die parallel zur Längsachse des ersten geraden Abschnitts (6) des Stabs (4) verlaufende Achse (19) mit der horizontalen Ebene (20) einen bestimmten Winkel α bildet, die Achse (21) der kleineren Seite (15) des Querschnitts (9) des ersten geraden Abschnitts (6) des Längsstabs (4) mit der vertikalen Ebene (22) einen bestimmten Winkel β bildet, und der zweite gerade Abschnitt (7) des Längsstabs (4) im Wesentlichen quer zur parallel zur Längsachse des ersten geraden Abschnitts (6) des Stabs (4) verlaufenden Achse (19) verläuft.

6. Vorrichtung (1) nach Anspruch 5, wobei die Eingangsrampe (2) mit dem ersten geraden Abschnitt (6) des Längsstabs (4) auf der Achse (21) zentriert ist; deren Ausgang (25) die gleiche Breite aufweist wie der Eingang (27) der flachen Platte (3) und auf gleicher Höhe angeordnet ist; sie mit Seitenwänden (26) ausgestattet ist, um einen Sturz der Sicherungsringe (12) zu verhindern; die vertikale Längsebene der Oberfläche (23) mit der vertikalen Ebene (22) den Winkel β bildet, die Oberfläche (23) mit der horizontalen Ebene (20) einen bestimmten Winkel θ bildet; und lang genug ist, um die bei der Aufnahme aus dem vorigen Prozess vertikal abprallenden Sicherungsringe (12) zu stabilisieren.

7. Vorrichtung (1) nach Anspruch 6, wobei die flache Platte (3) der Vorrichtung (1) mit dem ersten geraden Abschnitt (6) des Längsstabs (4) und der Eingangsrampe (2) auf der Achse (21) zentriert ist, und auf gleicher Höhe angeordnet ist, wobei die vertikale Längsebene der Oberfläche (32) mit der horizontalen Ebene den Winkel α bildet; mit der vertikalen Ebene (22) den Winkel β bildet und eine Fläche aufweist, die groß genug ist, damit sich die Sicherungsringe (12) drehen können.

8. Vorrichtung (1) nach den Ansprüchen 5 - 7, wobei diese einen durch die Seitenwand (28), eine zweite Seitenwand (29), eine Oberwand (30) und eine Unterwand (31) gebildeten Tunnel (5) umfasst; mit der Eingangsrampe (2), der flachen Platte (3) und dem ersten geraden Abschnitt (6) des Längsstabs (4) auf der Achse (21) zentriert ist; und, wie bei der flachen Platte (3) und dem ersten geraden Abschnitt (6) des Längsstabs (4), mit der horizontalen Ebene (20) den Winkel α bildet, und mit der vertikalen Ebene (22) den Winkel β bildet.

9. Vorrichtung (1) nach einem der Ansprüche 2 - 8, wobei der Abstand zwischen der Seitenwand (28) und der Achse (21) des ersten geraden Abschnitts (6) des Längsstabs (4) ungefähr gleich dem gemessenen Radius des Außenumfangs (33) der Sicherungsringe (12) ist.

10. Vorrichtung (1) nach einem der vorstehenden Ansprüche, wobei die verschiedenen Teile, aus denen die Vorrichtung (1) besteht, aus Metall, Kunststoff oder einem Material mit ähnlichen Eigenschaften sind.

11. In einer zur Positionierung C-förmiger oder ähnlicher Sicherungsringe (12) geeignete geeigneten Positioniervorrichtung (1) ausgeführtes Verfahren zur Positionierung von Sicherungsringen (12), wobei die Positioniervorrichtung (1) umfasst:
eine die Sicherungsringe (12) aufnehmende Eingangsrampe (2);
eine an die Eingangsrampe (2) anschließende flache Platte (3);
einen an die flache Platte (3) anschließenden Längsstab (4), der eine spezifische Form aufweist; und
eine parallel zur flachen Platte (3) und dem Längsstab (4) verlaufende Seitenwand (28);
**dadurch gekennzeichnet, dass** das Verfahren umfasst:
einen vertikalen Stabilisierungsschritt auf der Eingangsrampe (2), wobei die Sicherungsringe (12) den Prozess ohne spezifische Position und mit einer bestimmten potenziellen Energie beginnen, aufhören, entlang der Rampe (2) vertikal abzuprallen und die flache Platte (3) erreichen;
einen Drehstartschritt auf der flachen Platte (3), wobei die Sicherungsringe (12) infolge ihrer potentiellen energie entlang der flachen Platte (3) gleiten und gegen die Seitenwand (28) abprallen, wodurch sie infolge der Reibung auf ihrerAchse rotieren, und
einen Kopplungs-, Verlangsamungs- und Positionierungsschritt auf dem Längsstab (4), wobei sich die Sicherungsringe (12) mit dem Stab (4) koppeln, weitergleiten und letztendlich an Geschwindigkeit verlieren und positioniert werden.

12. Positionierungsverfahren nach Anspruch 11, wobei der Längsstab (4) einen ersten geraden Abschnitt (6) sowie einen zweiten geraden Abschnitt (7), die über einen gekrümmten Abschnitt (8) miteinander verbunden sind, aufweist,
einen Kopplungsschritt auf dem ersten geraden Abschnitt (6), wobei die Sicherungsringe (12) weiter gegen die Seitenwand (28) abprallen und gleiten und rotieren, bis dass die Sicherungsringe (12) sich mit dem Abschnitt des Stabs (4) koppeln und weitergleiten, und
einen Verlangsamungs- und Positionierungsschritt auf dem gekrümmten Abschnitt (8) sowie dem zweiten geraden Abschnitt (7) des Längsstabs (4), wobei die Sicherungsringe (12) die Richtung wechseln und auf dem gekrümmten Abschnitt (8) an Geschwindigkeit verlieren, und auf dem zweiten geraden Abschnitt (7) des Längsstabs (4) weitergleiten sobald der erste gerade Abschnitt (6) des Längsstabs (4) abgeschlossen ist, und sich infolge einer rechteckigen Projektion des zweiten geraden Abschnitts (7) entsprechend positionieren.

## Revendications

1. Dispositif pour positionner des anneaux de retenue (1) adapté pour positionner des anneaux de retenue en forme de C ou similaires (12), **caractérisé en ce qu'**il comprend :
une rampe d'entrée (2) qui reçoit les anneaux de retenue (12) ;
une plaque plate (3) continue par rapport à la rampe d'entrée (2) ;
une barre longitudinale (4) continue par rapport à la plaque plate (3) avec une forme spécifique; et
une paroi latérale (28) parallèle à la plaque plate (3) et à la barre longitudinale (4), dans lequel les anneaux de retenue (12) se déplacent d'une position inconnue tout le long du dispositif (1) jusqu'à leur position définitive, en raison de l'énergie potentielle dont ils disposent à l'entrée du dispositif (1).

2. Dispositif (1) selon la revendication 1, dans lequel la barre longitudinale (4) a une première partie droite (6) et une seconde partie droite (7), les deux raccordées par une partie incurvée (8).

3. Dispositif (1) selon la revendication 2, dans lequel la première partie droite (6) de la barre longitudinale (4) a une section transversale sensiblement rectangulaire (9), et la seconde partie droite de la barre (7) a une section transversale sensiblement circulaire (10) avec une saillie rectangulaire.

4. Dispositif (1) selon la revendication 3, dans lequel le petit côté (15) de la section transversale (9) de la première partie droite (6) de la barre longitudinale (4) est plus petit que l'ouverture (14) entre les extrémités ouvertes (13) des anneaux (12), le grand côté (17) est plus grand que le diamètre externe (33) des anneaux (12), et le diamètre externe (18) de la section transversale (10) de la seconde partie droite (7) de la barre longitudinale (4) est légèrement plus petit que le diamètre interne (16) des anneaux (12).

5. Dispositif (1) selon l'une quelconque des revendications 2 à 4, dans lequel l'axe (19) parallèle à l'axe longitudinal de la première partie droite (6) de la barre (4) forme avec le plan horizontal (20), un certain angle α, l'axe (21) du petit côté (15) de la section transversale (9) de la première partie droite (6) de la barre longitudinale (4) forme, avec le plan vertical (22), un certain angle β, et la seconde partie droite (7) de la barre longitudinale (4) est sensiblement perpendiculaire à l'axe (19) parallèle à l'axe longitudinal de la première partie droite (6) de la barre (4).

6. Dispositif (1) selon la revendication 5, dans lequel la rampe d'entrée (2) est centrée sur l'axe (21) avec la première partie droite (6) de la barre longitudinale (4) ; sa sortie (25) a la même largeur que l'entrée (27) de la plaque plate (3) et est située à la même hauteur ; elle dispose de parois latérales (26) pour empêcher la chute des anneaux (12) ; le plan vertical longitudinal de la surface (23) forme l'angle β avec le plan vertical (22), ladite surface (23) forme un certain angle θ avec le plan horizontal (20) ; et est assez longue pour stabiliser les anneaux (12) lorsqu'ils rebondissent verticalement lorsqu'elle les reçoit à partir du processus précédent.

7. Dispositif (1) selon la revendication 6, dans lequel la plaque plate (3) du dispositif (1) est centrée sur l'axe (21) avec la première partie droite (6) de la barre longitudinale (4) et la rampe d'entrée (2), et est située à la même hauteur, le plan vertical longitudinal de la surface (32) forme l'angle α avec le plan horizontal (20) ; forme l'angle β avec le plan vertical (22) ; et elle a une surface assez grande pour que les anneaux (12) tournent.

8. Dispositif (1) selon les revendications 5 à 7, dans lequel il comprend un tunnel (5) formé par la paroi latérale (28), une seconde paroi latérale (29), une paroi supérieure (30) et une paroi inférieure (31) ; est centré sur l'axe (21) avec la rampe d'entrée (2), la plaque plate (3) de la première partie droite (6) de la barre longitudinale (4) ; et comme cela est le cas avec la plaque plate (3) et la première partie droite (6) de la barre longitudinale (4), forme l'angle α avec le plan horizontal (20) et forme l'angle β avec le plan vertical (22).

9. Dispositif (1) selon l'une quelconque des revendications 2 à 8, dans lequel la distance entre la paroi latérale (28) et l'axe (21) de la première partie droite (6) de la barre longitudinale (4) est approximativement la même que la mesure du rayon de la circonférence externe (33) des anneaux (12).

10. Dispositif (1) selon l'une quelconque des revendications précédentes, dans lequel les différentes parties qui composent le dispositif (1) sont réalisées à partir de métal, de plastique ou d'un matériau ayant des caractéristiques similaires.

11. Procédé pour positionner des anneaux de retenue (12), mis en oeuvre dans un dispositif de positionnement (1) adapté pour positionner des anneaux de retenue en forme de C ou similaires (12), le dispositif de positionnement (1) comprenant :
une rampe d'entrée (2) qui reçoit les anneaux (12) ;
une première plaque (3) continue par rapport à la rampe d'entrée (2) ;
une barre longitudinale (4) continue par rapport à la plaque plate (3) avec une forme spécifique ; et
une paroi latérale (28) parallèle à la plaque plate (3) et à la barre longitudinale (4) ;
**caractérisé en ce qu'**il comprend:
une étape de stabilisation verticale sur la rampe d'entrée (2), dans laquelle les anneaux (12) commence le procédé sans position spécifique et avec une certaine énergie potentielle, arrêtent de rebondir verticalement le long de la rampe (2), et atteignent la première plaque (3),
une étape de début de rotation sur la plaque plate (3), dans laquelle les anneaux (12), en raison de leur énergie potentielle, coulissent le long de la plaque plate (3), rebondissant contre la paroi latérale (28), les amenant à tourner sur leur axe en raison de la friction, et
une étape de couplage, de ralentissement et de positionnement sur la barre longitudinale (4), dans laquelle les anneaux (12) se couplent sur ladite barre (4), coulissent et finalement ralentissent et sont positionnés.

12. Procédé de positionnement selon la revendication 11, dans lequel la barre longitudinale (4) comprend une première partie droite (6) et une seconde partie droite (7), les deux raccordées par une partie incurvée (8), comprenant l'étape de couplage, de ralentissement et de positionnement,
une étape de couplage sur la première partie droite (6), dans laquelle les anneaux (12) rebondissent contre la paroi latérale (28) et glissent et tournent, jusqu'à ce que les anneaux (12) se couplent sur ladite partie de la barre (4), en continuant à glisser, et
une étape de ralentissement et de positionnement sur la partie incurvée (8) et sur la seconde partie droite (7) de la barre longitudinale (4), dans laquelle les anneaux (12), une fois que la première partie droite (6) de la barre longitudinale (4) a été terminée, changent de direction et ralentissent sur la partie incurvée (8), et glissent le long de la seconde partie droite (7) de la barre longitudinale (4), se positionnent d'une manière appropriée, en raison d'une saillie rectangulaire sur la seconde partie droite (7).
